# EUROPEAN PATENT SPECIFICATION

(11) **EP 4 015 329 B1**
(45) Date of publication and mention of the grant of the patent: **12.07.2023**
(21) Application number: 21820068.1
(22) Date of filing: 09.06.2021
(51) Int. Cl.: B60W 30/06, B60W 50/00, B60W 50/14, B60K 35/00, B60K 37/06, B60R 1/00, G06V 20/58, B60R 1/27

(54) **INTERACTION METHOD AND APPARATUS FOR AUTOMATIC PARKING OF VEHICLE**
INTERAKTIONSVERFAHREN UND -VORRICHTUNG ZUM AUTOMATISCHEN PARKEN EINES FAHRZEUGS
PROCÉDÉ ET APPAREIL D'INTERACTION POUR LE STATIONNEMENT AUTOMATIQUE D'UN VÉHICULE

(30) Priority: 23.10.2020 CN 202011150491
(43) Date of publication of application: 22.06.2022
(73) Proprietor: Guangzhou Xiaopeng Motors Technology Co., Ltd., Guangzhou, Guangdong 510000 (CN)
(72) Inventor: HUANG, Yeting, Guangzhou, Guangdong 510000 (CN)
(74) Representative: Ran, Handong
(86) International application number: PCT/CN2021/099222
(87) International publication number: WO 2022/083135

(56) References cited:
- EP-A1- 2 181 892
- WO-A1-2022/017139
- CN-A- 109 693 666
- CN-A- 110 576 852
- CN-A- 110 576 852
- CN-A- 110 654 375
- CN-A- 111 201 558
- CN-A- 111 746 401
- CN-A- 112 249 005
- DE-A1-102006 026 092

## Description

### CROSS-REFERENCE TO RELATED APPLICATIONS

### FIELD

The present invention relates to the field of vehicle technologies, and in particular, to an interaction method for vehicle automatic parking and an interaction apparatus for vehicle automatic parking.

### BACKGROUND

In the development process of vehicle intelligence, in-vehicle sensors have developed rapidly, and vehicles equipped with more and more advanced sensors have entered people's sight. The sensors can not only play a key role in automatic driving, but also help people solve parking problems. In an automatic parking process, the automatic parking system of the vehicle can sense the environment around the vehicle through the sensors mounted around the vehicle, and present it to a user. However, in some scenarios, it is easy to occur that a parking space is not fully displayed, or the user cannot clearly see the surrounding environment of the vehicle during a parking process, which causes anxiety of unsafety to the user during the parking process and affects the user experience. DE 102006026092A1 discloses a method for controlling the parking process.

### SUMMARY

The embodiments of the present invention provide an interaction method for vehicle automatic parking to solve the problem that a user cannot perceive the environment around the vehicle during a vehicle parking process in the related art.

Correspondingly, the embodiments of the present invention also provide an interaction method for vehicle automatic parking, applied to a vehicle including an in-vehicle display device, and the method includes: displaying in the in-vehicle display device, in response to detecting an automatic parking start instruction, a three-dimensional virtual parking scene and a corresponding current real scene; controlling, in response to a user operation on the three-dimensional virtual parking scene, the in-vehicle display device to present the three-dimensional virtual parking scene corresponding to the user operation and display a real scene corresponding to the three-dimensional virtual parking scene, where the three-dimensional virtual parking scene includes at least one parking control, and each of the at least one parking control corresponds to one available parking space; and determining, in response to a selection operation on the at least one parking control, a target available parking space, and generating a parking instruction for the target available parking space to control the vehicle to park in the target available parking space.

Optionally, said controlling, in response to the user operation on the three-dimensional virtual parking scene, the in-vehicle display device to present the three-dimensional virtual parking scene corresponding to the user operation and display the real scene corresponding to the three-dimensional virtual parking scene includes: controlling, in response to a zooming operation on the three-dimensional virtual parking scene, zooming-in or zooming-out of the three-dimensional virtual parking scene and the real scene within a predetermined zoom range in the in-vehicle display device; and controlling, in response to a termination of the zooming operation on the three-dimensional virtual parking scene, the three-dimensional virtual parking scene and the real scene to be reset to a predetermined display scale in the in-vehicle display device.

Optionally, said controlling, in response to the zooming operation on the three-dimensional virtual parking scene, zooming-in or zooming-out of the three-dimensional virtual parking scene and the real scene within the predetermined zoom range in the in-vehicle display device includes: determining, in response to a first zooming operation on the three-dimensional virtual parking scene, a first zooming scale corresponding to the first zooming operation; zooming in or out on the three-dimensional virtual parking scene and the real scene based on the first zooming scale in the in-vehicle display device, when the first zooming scale is smaller than or equal to a maximum scale; and zooming in or out on the three-dimensional virtual parking scene and the real scene based on the maximum scale in the in-vehicle display device, when the first zooming scale is greater than the maximum scale.

Optionally, said controlling, in response to the zooming operation on the three-dimensional virtual parking scene, zooming-in or zooming-out of the three-dimensional virtual parking scene and the real scene within the predetermined zoom range in the in-vehicle display device includes: determining, in response to a second zooming operation on the three-dimensional virtual parking scene, a second zooming scale corresponding to the second zooming operation; zooming in or out on the three-dimensional virtual parking scene and the real scene based on the second zooming scale in the in-vehicle display device, when the second zooming scale is greater than or equal to a minimum scale; and zooming in or out on the three-dimensional virtual parking scene and the real scene based on the minimum scale in the in-vehicle display device, when the second zooming scale is less than the minimum scale.

Optionally, said controlling, in response to the user operation on the three-dimensional virtual parking scene, the in-vehicle display device to present the three-dimensional virtual parking scene corresponding to the user operation and display the real scene corresponding to the three-dimensional virtual parking scene includes: controlling, in response to a termination of a swiping operation on the three-dimensional virtual parking scene, the three-dimensional virtual parking scene and the real scene to rotate in a direction corresponding to the swiping operation within a predetermined angle range in the in-vehicle display device.

Optionally, said controlling, in response to the termination of the swiping operation on the three-dimensional virtual parking scene, the three-dimensional virtual parking scene and the real scene to rotate in the direction corresponding to the swiping operation within the predetermined angle range in the in-vehicle display device includes: controlling, in response to a termination of a lateral swiping operation on the three-dimensional virtual parking scene, the three-dimensional virtual parking scene and the real scene to rotate in a direction corresponding to the lateral swiping operation within a first predetermined angle range in the in-vehicle display device.

Optionally, said controlling, in response to the termination of the swiping operation on the three-dimensional virtual parking scene, the three-dimensional virtual parking scene and the real scene to rotate in the direction corresponding to the swiping operation within the predetermined angle range in the in-vehicle display device includes: controlling, in response to a termination of a longitudinal swiping operation on the three-dimensional virtual parking scene, the three-dimensional virtual parking scene and the real scene to rotate in a direction corresponding to the longitudinal swiping operation within a second predetermined angle range in the in-vehicle display device.

Optionally, the three-dimensional virtual parking scene includes at least one display hot zone, and said controlling, in response to the user operation on the three-dimensional virtual parking scene, the in-vehicle display device to present the three-dimensional virtual parking scene corresponding to the user operation and display the real scene corresponding to the three-dimensional virtual parking scene includes: in response to the user operation on the three-dimensional virtual parking scene, hiding the at least one display hot zone, and controlling the in-vehicle display device to present the three-dimensional virtual parking scene corresponding to the user operation and display the real scene corresponding to the three-dimensional virtual parking scene; and displaying, in response to a termination of the user operation on the three-dimensional virtual parking scene, the at least one display hot zone in the three-dimensional virtual parking scene.

Optionally, the method further includes: resetting the three-dimensional virtual parking scene and the real scene to a default viewing angle in the in-vehicle display device, when no user operation on the three-dimensional virtual parking scene is detected within a predetermined time period.

Optionally, the method further includes: in response to detecting an abnormal signal sent by a predetermined sensor, resetting the three-dimensional virtual parking scene and the real scene to a default viewing angle, and stopping responding to the user operation on the three-dimensional virtual parking scene.

Optionally, each of the at least one parking control is a three-dimensional control.

The embodiments of the present invention also disclose an interaction apparatus for vehicle automatic parking, applied to a vehicle including an in-vehicle display device, and the apparatus includes: a scene displaying module configured to display, in response to detecting an automatic parking start instruction, a three-dimensional virtual parking scene and a corresponding current real scene in the in-vehicle display device; a scene processing module configured to: control, in response to a user operation on the three-dimensional virtual parking scene, the in-vehicle display device to present the three-dimensional virtual parking scene corresponding to the user operation and display a real scene corresponding to the three-dimensional virtual parking scene, where the three-dimensional virtual parking scene includes at least one parking control, and each of the at least parking control corresponds to one available parking space; and a parking processing module configured to: determine, in response to a selection operation on the at least one parking control, a target available parking space and generate a parking instruction for the target available parking space to control the vehicle to park in the target available parking space.

Optionally, the scene processing module includes: a scene zooming sub-module configured to: control, in response to a zooming operation on the three-dimensional virtual parking scene, zooming-in or zooming-out of the three-dimensional virtual parking scene and the real scene within a predetermined zoom range in the in-vehicle display device; and a scene resetting sub-module configured to: control, in response to a termination of the zooming operation on the three-dimensional virtual parking scene, the three-dimensional virtual parking scene and the real scene to be reset to a predetermined display scale in the in-vehicle display device.

Optionally, the scene zooming sub-module is specifically configured to: determine, in response to a first zooming operation on the three-dimensional virtual parking scene, a first zooming scale corresponding to the first zooming operation; zoom in or out on the three-dimensional virtual parking scene and the real scene in accordance with the first zooming scale in the in-vehicle display device, when the first zooming scale is smaller than or equal to a maximum scale; and zoom in or out on the three-dimensional virtual parking scene and the real scene in accordance with the maximum scale in the in-vehicle display device, when the first zooming scale is greater than the maximum scale.

Optionally, the scene zooming sub-module is specifically configured to: determine, in response to a second zooming operation on the three-dimensional virtual parking scene, a second zooming scale corresponding to the second zooming operation; zoom in or out on the three-dimensional virtual parking scene and the real scene in accordance with the second zooming scale in the in-vehicle display device, when the second zooming scale is greater than or equal to a minimum scale; and zoom in or out on the three-dimensional virtual parking scene and the real scene in accordance with the minimum scale in the in-vehicle display device, when the second zooming scale is smaller than the minimum scale.

Optionally, the scene processing module includes a scene rotation sub-module configured to: control, in response to a termination of a swiping operation on the three-dimensional virtual parking scene, the three-dimensional virtual parking scene and the real scene to rotate in a direction corresponding to the swiping operation within a predetermined angle range in the in-vehicle display device.

Optionally, the scene rotation sub-module is specifically configured to: control, in response to a termination of a lateral swiping operation on the three-dimensional virtual parking scene, the three-dimensional virtual parking scene and the real scene to rotate in a direction corresponding to the lateral swiping operation within a first predetermined angle range in the in-vehicle display device.

Optionally, the scene rotation sub-module is specifically configured to: control, in response to a termination of a longitudinal swiping operation on the three-dimensional virtual parking scene, the three-dimensional virtual parking scene and the real scene to rotate in a direction corresponding to the longitudinal swiping operation within a second predetermined angle range in the in-vehicle display device.

Optionally, the three-dimensional virtual parking scene includes at least one display hot zone, and the scene processing module includes a scene processing sub-module configured to: in response to the user operation on the three-dimensional virtual parking scene, hide the at least one display hot zone, and control the in-vehicle display device to present the three-dimensional virtual parking scene corresponding to the user operation and display the real scene corresponding to the three-dimensional virtual parking scene; and a hot zone display sub-module configured to: display, in response to a termination of the user operation on the three-dimensional virtual parking scene, the at least one display hot zone in the three-dimensional virtual parking scene.

Optionally, the apparatus further includes a viewing angle resetting module configured to: reset the three-dimensional virtual parking scene and the real scene to a default viewing angle in the in-vehicle display device, when no user operation on the three-dimensional virtual parking scene is detected within a predetermined time period.

Optionally, the apparatus further includes a response processing module configured to: in response to detecting an abnormal signal sent by a predetermined sensor, reset the three-dimensional virtual parking scene and the real scene to a default viewing angle, and stop responding to the user operation on the three-dimensional virtual parking scene.

Optionally, each of the at least one parking control is a three-dimensional control.

The embodiments of the present invention further disclose a vehicle. The vehicle includes: one or more processors; and one or more machine-readable media having instructions stored thereon, where the instructions, when executed by the one or more processors, cause the vehicle to implement one or more of the methods described above.

The embodiments of the present invention further disclose a machine-readable medium having instructions stored thereon, where the instructions, when executed by one or more processors, cause the one or more processors to implement one or more of the methods described above.

The embodiments of the present invention include the following advantages.

In the embodiments of the present invention, which can be applied to a vehicle that includes an in-vehicle display device. The vehicle displays a three-dimensional virtual parking scene and a corresponding current real scene in the in-vehicle display device in response to detecting an automatic parking start instruction; then controls, in response to a user operation on the three-dimensional virtual parking scene, the in-vehicle display device to present a three-dimensional virtual parking scene corresponding to the user operation and display a real scene corresponding to the three-dimensional virtual parking scene, the three-dimensional virtual parking scene including at least one parking control, each of the at least one parking control corresponding to one available parking space; then determines, in response to a selection operation on the at least one parking control, a target available parking space, and generates a parking instruction for the target available parking space to control the vehicle to park in the target available parking space. In this way, in the parking process of a user, the user can operate on the in-vehicle display device to improve the user's perception of the surrounding environment of the vehicle, thereby ensuring the safety of parking and improving the user experience.

### BRIEF DESCRIPTION OF DRAWINGS

In order to more clearly explain the technical solutions in the embodiments of the present invention or the prior art, the drawings, which need to be used in the description of the embodiments or the prior art, will be briefly introduced below. Obviously, the drawings in the following description are some embodiments of the present invention. For those of ordinary skills in the art, other drawings can be obtained based on these drawings without creative effort.
FIG. 1 is a flow chart of steps in an interaction method for vehicle automatic parking according to an embodiment of the present invention;
FIG. 2 is a schematic diagram of an in-vehicle central control screen according to an embodiment of the present invention;
FIG. 3 is a schematic diagram of a zooming operation according to an embodiment of the present invention;
FIG. 4 is a schematic diagram of a zooming scale according to an embodiment of the present invention;
FIG. 5 is a schematic diagram of a three-dimensional virtual parking scene coordinate system according to an embodiment of the present invention;
FIG. 6 is a schematic diagram of display hot zones according to an embodiment of the present invention;
FIG. 7 is a schematic diagram of a three-dimensional virtual parking scene according to an embodiment of the present invention;
FIG. 8 is a schematic diagram of a three-dimensional virtual parking scene according to an embodiment of the present invention;
FIG. 9 is a schematic diagram of a three-dimensional virtual parking scene according to an embodiment of the present invention;
FIG. 10 is a schematic diagram of a three-dimensional virtual parking scene according to an embodiment of the present invention;
FIG. 11 is a schematic diagram of a three-dimensional virtual parking scene according to an embodiment of the present invention;
FIG. 12 is a partial schematic diagram of resetting of a three-dimensional virtual parking scene according to an embodiment of the present invention; and
FIG. 13 is a structural block diagram of an interaction apparatus for vehicle automatic parking according to an embodiment of the present invention.

### DESCRIPTION OF EMBODIMENTS

In order to make the above objectives, features, and advantages of the present invention more apparent and understandable, the present invention will be further described in detail below in conjunction with the accompanying drawings and the specific implementations.

With the development of various types of vehicle sensor technologies, a user can perceive the environment around a vehicle through an in-vehicle display device. In this way, during a parking process, the user can effectively park the vehicle according to the surrounding environment of the vehicle, which includes that the user manually parks the vehicle according to the surrounding environment of the vehicle, and that the vehicle automatically parks according to an acquired surrounding environment, etc.

The user can display the environment around the vehicle in a graphical user interface of the in-vehicle display device (including an in-vehicle central control screen, etc.) configured in the vehicle and a graphical user interface of a mobile terminal such as a mobile terminal, and thus the user can intuitively perceive a current environment of the vehicle. In this process, the vehicle can present the current environment in which the vehicle is located to the user by displaying images in real-time, for example, by capturing panoramic images of the vehicle through cameras configured in different positions of the vehicle, and displaying the panoramic images, so that the user can perceive environment information through the images to park the vehicle. However, in this process, the user cannot operate on the images, and the environmental information presented by the images is relatively single, which result in that the user can hardly have a more comprehensive perception of the environment in which the vehicle is located, and the user is likely to have anxiety of unsafety.

Therefore, one of the core concepts of the embodiments of the present invention is that, after an automatic parking start instruction inputted by the user is detected, a three-dimensional virtual parking scene and a corresponding current real scene of the vehicle are displayed in the in-vehicle display device, and then in response to an operation of the user on the three-dimensional virtual parking scene, the three-dimensional virtual parking scene and the real scene are controlled to be displayed, the three-dimensional virtual parking scene including at least one parking control, so that the user can select a corresponding parking control to cause the vehicle to generate a corresponding parking instruction so as to control the vehicle to park in a corresponding parking space through the parking instruction. In this way, the user can perceive the environment of the vehicle from different angles, which not only improves interaction experience of the user, but also further improves the user's perception of the current environment of the vehicle, ensures the safety of parking, and improves the user experience.

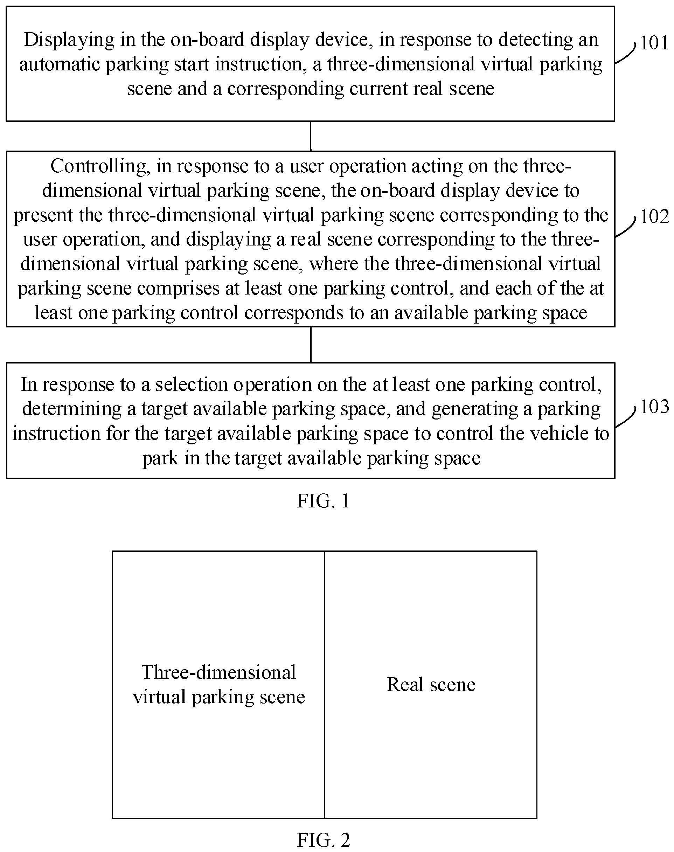

Referring to FIG. 1, a flow chart of steps of an interaction method for vehicle automatic parking according to an embodiment of the present invention is illustrated. The method is applied to a vehicle including an in-vehicle display device. The method may specifically include the following steps.

In step 101, in response to detecting an automatic parking start instruction, a three-dimensional virtual parking scene and a corresponding current real scene are displayed in the in-vehicle display device.

As an example, the embodiment of the present invention takes the in-vehicle display device, especially an in-vehicle central control screen as an example for illustrative description, and it is understood that this invention is not limited hereto.

In the embodiment of the present invention, the vehicle can display, in response to detecting the automatic parking start instruction, the three-dimensional virtual parking scene and the corresponding current real scene of the vehicle in the in-vehicle display device. Before turning on the automatic parking function of the vehicle, the user needs to search for a suitable parking space, and in this process, the vehicle runs at a low speed (for example, the vehicle speed is 10km/h, etc.), and at the same time, the real scene of the current environment in which the vehicle is located and the corresponding three-dimensional virtual parking scene can be displayed in the in-vehicle central control screen, for example, at least one available parking space is displayed in the three-dimensional virtual parking scene and the environment information corresponding to the at least one available parking space is displayed in the real scene, so as to facilitate the user to choose the parking space and check the surrounding environment, and to reduce parking anxiety.

In a specific implementation, current vehicle information of the vehicle can be obtained through various types of sensors installed on the vehicle, including panoramic cameras, ultrasonic sensors, infrared sensors, GPS positioning sensors, and vehicle speed detection sensors, etc.. For example, for the real scene, by performing image acquisition on the current environment in which the vehicle is located by the cameras arranged in different positions of the vehicle, the vehicle can obtain an image 360° surrounding the vehicle and display the image in the in-vehicle central control screen; and for the three-dimensional virtual parking scene, after current vehicle speed information, longitude and latitude information, environment information, and other information of the vehicle are obtained, the three-dimensional virtual parking scene is generated according to the environment information, a virtual vehicle corresponding to the vehicle is positioned in the three-dimensional virtual parking scene based on the latitude and longitude information, and in the meantime, the displayed three-dimensional virtual parking scene and the displayed real scene can be updated synchronously as the vehicle moves in the environment, so that the user can perceive the state of the environment in which the vehicle is located through the in-vehicle central control screen, and then perform automatic parking. Among them, an actual moving direction of the vehicle is consistent with a moving direction of the virtual vehicle in the three-dimensional virtual parking scene, and the moving direction of the virtual vehicle in the three-dimensional virtual parking scene is used as a current orientation, which is used for browsing the three-dimensional virtual parking scene in a current travel direction of the vehicle.

In an example, when the vehicle detects that the vehicle speed is smaller than or equal to a predetermined vehicle speed threshold, parking prompt information is displayed in the in-vehicle display device to prompt the user whether to perform automatic parking, and then when the user enters a confirmation operation (including entering a touch operation, voice confirmation, and confirmation through mechanical buttons, etc. in the in-vehicle central control screen), the vehicle can display the three-dimensional virtual parking scene and the corresponding current real scene in the in-vehicle display device, in response to the confirmation operation for the parking prompt information. For example, referring to FIG. 2, which illustrates a schematic diagram of the in-vehicle central control screen according to an embodiment of the present invention, the three-dimensional virtual parking scene can be displayed on a side of the in-vehicle central control screen close to a driving seat, and the real scene can be displayed on the other side of the in-vehicle central control screen. For the vehicle with the driving seat on the left, the three-dimensional virtual parking scene can be displayed on the left side of the in-vehicle central control screen, and for the vehicle with the driving seat on the right, the three-dimensional virtual parking scene can be displayed on the right side of the in-vehicle central control screen, so that the three-dimensional virtual parking scene is displayed on the side close to the driver, which is convenient for the driver to operate the in-vehicle central control screen during a low-speed running process of the vehicle, and improves the convenience of user operations while ensuring driving safety.

In step 102, the in-vehicle display device is controlled, in response to a user operation on the three-dimensional virtual parking scene, to present a three-dimensional virtual parking scene corresponding to the user operation and display a real scene corresponding to the three-dimensional virtual parking scene, where the three-dimensional virtual parking scene includes at least one parking control, and each of the at least one parking control corresponds to one available parking space.

In an embodiment of the present invention, the in-vehicle central control screen can respond to the user operation on the three-dimensional virtual parking scene to present the three-dimensional virtual parking scene corresponding to the user operation and display the real scene corresponding to the three-dimensional virtual parking scene, so that the user can operate on the three-dimensional virtual parking scene and view the real environment around the vehicle from different angles, thereby improving the user's perception of the environment to facilitate the parking of the vehicle. The three-dimensional virtual parking scene may include at least one parking control, each of the at least one parking control may correspond to a real available parking space in the environment where the vehicle is currently located, and each of the at least one parking control may be a three-dimensional control. It is easier for the user to perform operations through the three-dimensional control, improving the interaction experience of the user operations.

It should be noted that when the user is actually looking for a parking space, the three-dimensional virtual parking scene displayed on the in-vehicle central control screen may not be able to fully display all the information about the relevant available parking spaces (for example, the available parking spaces are not completely displayed, etc. ), in the case of which, the user can operate on, e.g., zoom in or out on and rotate the three-dimensional virtual parking scene to cause the three-dimensional virtual parking scene to display the corresponding information according to the user operation, and update the three-dimensional virtual parking scene in linkage with the real scene in real time. In this way, the user can enter the corresponding use operation in the three-dimensional virtual parking scene, and obtain environment information of the environment where the vehicle is located from different angles, which not only facilitates the selection of the parking space and the browsing of the surrounding environment for the user, and reduces the parking anxiety, but also improves the interaction experience of the user during the parking process, while ensuring safe parking of the user.

In an alternative embodiment of the present invention, the vehicle can control zooming-in or zooming-out of the three-dimensional virtual parking scene and the real scene within a predetermined zoom range in the in-vehicle display device; and control, in response to a termination of the zooming operation on the three-dimensional virtual parking scene, the three-dimensional virtual parking scene and the real scene to be reset to a predetermined display scale in the in-vehicle display device.

In a specific implementation, the in-vehicle central control screen can obtain a current distance between a predetermined virtual camera and the virtual vehicle and an original distance between the predetermined virtual camera and the virtual vehicle in response to the zooming operation on the three-dimensional virtual parking scene, then generate a zooming scale by using the current distance and the original distance, and zoom in or out on the three-dimensional virtual parking scene by using the zooming scale.

It should be noted that in the three-dimensional virtual parking scene, the three-dimensional virtual parking scene can be presented through the virtual camera, the position of the virtual camera can move with the movement of the virtual vehicle in the three-dimensional virtual parking scene, and a certain distance between the virtual camera and the virtual vehicle may be maintained. The display scale of the three-dimensional virtual parking scene can be controlled by the distance between the virtual camera and the virtual vehicle, for example, the smaller the distance between the virtual camera and the virtual vehicle is, the greater the display scale of the three-dimensional virtual parking scene is and the smaller the visual range of the three-dimensional virtual parking scene is; and the greater the distance is, the smaller the display scale of the three-dimensional virtual parking scene is and the greater the visual range of the three-dimensional virtual parking scene is. Here, a default viewing angle of the virtual camera is consistent with the current orientation of the virtual vehicle, and the user can move the viewing angle of the virtual camera by entering a corresponding operation to realize the perception of the environment in which the vehicle is located from different angles.

In the real scene, image acquisition can be performed on the environment where the vehicle is currently located through the real cameras of the vehicle, and the acquired image can be presented on the in-vehicle central control screen. With the user operation in the three-dimensional virtual parking scene, the cameras of the vehicle can be controlled to perform the corresponding image acquisition. For example, the user enters a swiping operation in the three-dimensional virtual parking scene to control the three-dimensional virtual parking scene to rotate, during rotation of which, the vehicle can control the real cameras to rotate and acquire images from different angles; and the user enters a zooming operation in the three-dimensional virtual parking scene to control zooming-in or zooming-out of the three-dimensional virtual parking scene, during zooming of which, the vehicle can control the real cameras to adjust the focal length, the imaging size, the size of the field of view, the size of the depth of field, and the like, to achieve the joint update between the three-dimensional virtual parking scene and the real scene to allow the user to perceive the environment in which the vehicle is located from different angles, which facilitates the selection of the parking space and the browse of the surrounding environment, and reduces parking anxiety.

A picture corresponding to the three-dimensional virtual parking scene presented in the in-vehicle central control screen can be displayed according to a certain display scale, so that the user can enter a zooming operation in the in-vehicle central control screen with two fingers to control the display scale of the three-dimensional virtual parking scene. Specifically, for the display scale, a maximum display scale for displaying the three-dimensional virtual parking scene and a zooming scale for zooming-out of the three-dimensional virtual parking scene can be set, for example, a zooming-in upper limit can be set to a scale corresponding to the picture during the automatic parking process, and a display scale is set as the zooming-out scale in consideration of the definition of the presented picture, so that the user can zoom in or out on the three-dimensional virtual parking scene between the maximum display scale and the minimum display scale.

In an example, the in-vehicle central control screen may determine, in response to a first zoom operation on the three-dimensional virtual parking scene, a first zooming scale corresponding to the first zooming operation; when the first zooming scale is smaller than or equal to a maximum scale, zooming-in or zooming-out of the three-dimensional virtual parking scene and the real scene is performed according to the first zooming scale in the in-vehicle display device; when the first zooming scale is greater than the maximum scale, zooming-in or zooming-out of the three-dimensional virtual parking scene and the real scene is performed according to the maximum scale in the in-vehicle display device; and in response to the termination of the zooming operation on the three-dimensional virtual parking scene, the three-dimensional virtual parking scene and the real scene are controlled to be reset to the predetermined display scale in the in-vehicle central control screen.

In another example, the in-vehicle central control screen determines, in response to a second zooming operation on the three-dimensional virtual parking scene, a second zooming scale corresponding to the second zooming operation; when the second zooming scale is greater than or equal to a minimum scale, zooming-in or zooming-out of the three-dimensional virtual parking scene and the real scene is performed according to the second zooming scale in the in-vehicle display device; when the second zooming scale is smaller than the minimum scale, zooming-in or zooming-out of the three-dimensional virtual parking scene and the real scene is performed according to the minimum scale in the in-vehicle display device; and in response to the termination of the zooming operation on the three-dimensional virtual parking scene, the three-dimensional virtual parking scene and the real scene are controlled to be reset to the predetermined display scale in the in-vehicle central control screen.

Specifically, when the zooming scale corresponding to the zooming operation is greater than the maximum display scale or smaller than the minimum display scale, zooming-in or zooming-out of the three-dimensional virtual parking scene is performed according to the zooming scale and the zoomed three-dimensional virtual parking scene is displayed, and then the zoomed three-dimensional virtual parking scene is reset to the predetermined display scale in response to the termination of the zooming operation on the three-dimensional virtual parking scene. The predetermined display scale can be an optimum scale for the user to browse the three-dimensional virtual parking scene during the driving process; and with this display scale, the user can more intuitively and comprehensively browse the environment where the vehicle is currently located, which facilitates the selection of a parking space, and the at least one parking control is always displayed in the scene as zooming-in or zooming-out of the three-dimensional virtual parking scene is performed, which also facilitates the selection of the parking space by the user.

It should be noted that when the zooming scale corresponding to the zooming operation entered by the user has reached the maximum or minimum display scale, if the user continues zooming in or out, the in-vehicle central control screen can further control zooming-in or zooming-out of the three-dimensional virtual parking scene by a certain scale, for example, 5%, 10%, etc., and reset the three-dimensional virtual parking scene to a default scale in response to detection of the fingers of the user leaving the graphical user interface. Thus, by setting rebound effects of the presentation interface, the user's perception of the environment the vehicle is in is further improved to facilitate parking while improving interaction experience of the user.

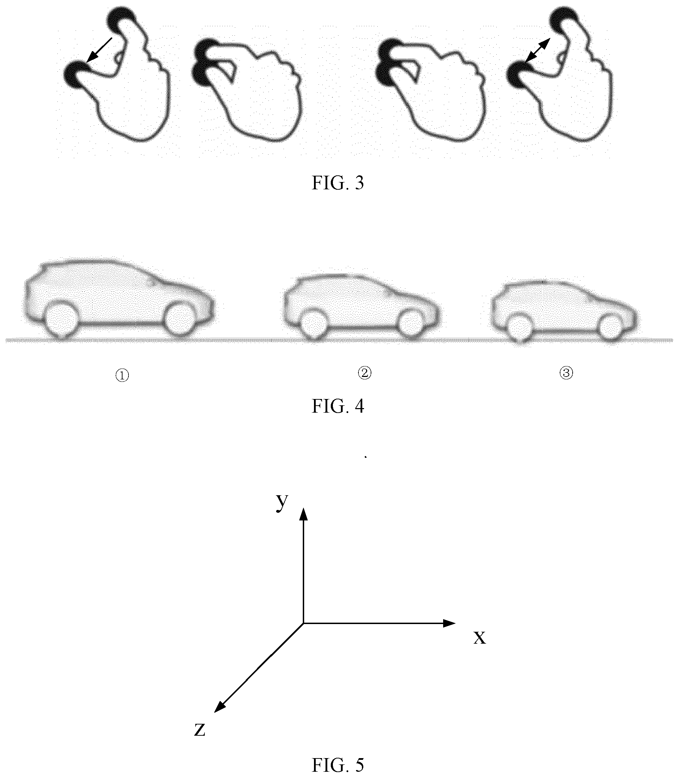

In an example, referring to FIG. 3, a schematic diagram of the zooming operation according to an embodiment of the present invention is illustrated. Two-finger zooming realizes the corresponding function by adjusting the distance between the virtual camera and the virtual vehicle. Referring to FIG. 4, a schematic diagram of the zooming scale in an embodiment of the present invention is illustrated, which includes (1) the maximum zooming scale (the corresponding display scale after the vehicle starts to park automatically), (2) the default scale (the corresponding display ratio when the user is looking for a parking space), and (3) the minimum zooming scale (10% smaller than the default scale). Within this range, the user can zoom in and out on the three-dimensional virtual parking scene, and when the zooming scale of the zooming operation is greater than the maximum zooming scale, or smaller than the minimum zooming scale, further zooming-in or zooming-out of the displayed picture can be performed, and when the fingers of the user leave the screen, the three-dimensional virtual parking scene is restored to the picture corresponding to the maximum or minimum display scale. In the process of zooming-in or zooming-out of the three-dimensional virtual parking scene, zooming-in or zooming-out of the current real scene of the vehicle corresponding to the three-dimensional virtual parking scene will also be preformed accordingly, therefore the user can perceive the real scene by operating on the three-dimensional virtual parking scene, improving the convenience of parking.

Specifically, for the zooming operation, the current distance and the original distance between the virtual camera and the virtual vehicle can be obtained, then the zooming scale is calculated based on a ratio between the current distance and the original distance, and zooming-in or zooming-out of the three-dimensional virtual parking scene is performed according to the zooming scale. Further, when zooming-in of the three-dimensional virtual parking scene reaches the maximum scale, on the basis of which, zooming-in of the three-dimensional virtual parking scene is further performed by 5%, or when zooming-out of the three-dimensional virtual parking scene reaches the minimum scale, on the basis of which, zooming-out of the three-dimensional virtual parking scene is further performed by 5%, the rebound effects of the picture can be triggered when the fingers of the user leave the in-vehicle central control screen, whether to zoom in or zoom out is determined by calculating a rebound proportion needed and then the corresponding rebound effects are executed.

In another alternative embodiment of the present invention, the in-vehicle central control screen responds to a termination of a swiping operation on the three-dimensional virtual parking scene to control the three-dimensional virtual parking scene and the real scene to rotate in a direction corresponding to the swiping operation within a predetermined angle range in the in-vehicle display device.

In specific implementation, the user operation can include a swiping operation on the three-dimensional virtual parking scene. The swiping operation can correspond to the rotation of the three-dimensional virtual parking scene. Within the allowable angle range of the three-dimensional virtual parking scene, the angle changing amount and the angle changing direction can change with the swiping distance and the swiping direction of the finger, thereby rotating the three-dimensional virtual parking scene, and controlling the switching of the viewing angle of the real scene corresponding to the vehicle.

It should be noted that the swiping operation can be divided into a horizontal swiping operation and a vertical swiping operation according to the swiping directions, the horizontal swiping operation can correspond to the horizontal rotation of the three-dimensional virtual parking scene, and the vertical swiping operation can correspond to the vertical rotation of the three-dimensional virtual parking scene. Specifically, the user can swipe a finger laterally or longitudinally on the in-vehicle central control screen, so that the three-dimensional virtual parking scene, i.e., a virtual scene displayed on the in-vehicle central control screen corresponding to a three-dimensional parking scene, is within the allowable angle range, and the corresponding angle changing amount and angle changing direction change with the swiping distance and the swiping direction of the finger. The three-dimensional parking scene is a real scene.

Specifically, the in-vehicle central control screen can respond to a termination of a lateral swiping operation on the three-dimensional virtual parking scene to control the three-dimensional virtual parking scene and the real scene to rotate in a direction corresponding to the lateral swiping operation within a first predetermined angle range in the in-vehicle display device. Also, the in-vehicle central control screen can respond to a termination of a longitudinal swiping operation on the three-dimensional virtual parking scene to control the three-dimensional virtual parking scene and the real scene to rotate in a direction corresponding to the longitudinal swiping operation within a second predetermined angle range in the in-vehicle display device.

In order to ensure browsing effects of the user, the rotation angle of the three-dimensional virtual parking scene can be restricted. For example, for the longitudinal swiping operation, the three-dimensional virtual parking scene can be restricted to rotate within a certain angle range, so as to provide the user with a suitable viewing angle and ensure the browsing effects of the user; for the lateral swiping operation, rotation within 360° can be achieved. In addition, the lateral swiping operation and the longitudinal swiping operation are not limited to being parallel to the horizontal axis or the vertical axis in order to slide the three-dimensional virtual parking scene, and a corresponding angle deviation range may be set. When an angle between a swiping trajectory of a swiping operation and a corresponding axis fall within the angular deviation range, the swiping operation is regarded as the corresponding swiping operation. For example, the angle deviation range from the horizontal axis is 0° to 45°, and when the angle between the swiping trajectory and the horizontal axis falls within this range, the swiping operation is regarded as a lateral swiping operation, and when the angle is larger than this range, the swiping operation is regarded as a longitudinal swiping operation, and the same is for the longitudinal swiping operation.

In an example, referring to FIG. 5, a schematic diagram of a three-dimensional virtual parking scene coordinate system according to an embodiment of the present invention is illustrated. The x-axis and the z-axis are in the horizontal plane and the y-axis is perpendicular to the plane formed by the x-axis and the z-axis, the viewing angle for currently looking for a parking space can be 58° relative to the z-axis (this angle can be determined by calibration and is a relatively appropriate viewing angle for screen display when the user is looking for the parking space) and an overlooking viewing angle is 0°; then for the vertical swiping operations, the corresponding picture rotation range can be 0° to 58°; for the horizontal swiping operation, the corresponding picture rotation range can be 0° to 360°; and the center position of the three-dimensional virtual parking scene can be used as the center of the picture rotation corresponding to the swiping operation. Thus, when the user rotates the three-dimensional virtual parking scene horizontally through the horizontal swiping operation, the swiping distance corresponding to the swiping operation can be obtained and converted into a swiping offset corresponding to the x-axis, a target vector that is fixedly set can be obtained, the y-axis is used as the rotation axis, the virtual camera rotates about the y-axis by the corresponding swiping offset to realize the horizontal rotation of the three-dimensional virtual parking scene, and other places of the three-dimensional virtual parking scene are viewed by adjusting the horizontal viewing angle; and when the user rotates the three-dimensional virtual parking scene vertically through the vertical swiping operation, the swiping distance corresponding to the swiping operation can be obtained and converted into a swiping offset corresponding to the y-axis, a target vector that is fixedly set, normal vector coordinates of the virtual camera, and vector coordinates of the orientation direction of the virtual camera can be obtained, then the y-axis is set to 0 according to a cross product of the normal vector coordinates and the vector coordinates, the y-axis is limited to not rotate, then the virtual camera is controlled to rotate in the plane formed by the z-axis and the y-axis within the rotation range of 0° to 58° to realize the vertical rotation of the three-dimensional virtual parking scene, an overlooking viewing angle is switched by adjusting a vertical presentation viewing angle, and a more comprehensive environment information is obtained by looking down on the three-dimensional virtual parking scene.

In addition, the swiping operation can be divided into a fast swiping operation and a normal swiping operation according to the swiping speed. The normal swiping operation refers to an operation with a speed close to 0 when the user's finger leaves the screen, and the fast swiping operation refers to an operation that the user's finger swipes on the screen at a certain speed and then leaves the screen. For the fast swiping operation, the angle changing amount can be determined according to the speed of the finger when leaving the screen and the current vehicle speed of the vehicle, and the rotation direction of the picture remains consistent with the swiping direction, so as to realize a conversion of the three-dimensional virtual parking scene.

Specifically, the in-vehicle central control screen can obtain, in response to the termination of the swiping operation on the three-dimensional virtual parking scene, the vehicle speed information corresponding to the virtual vehicle and the swiping speed information of the swiping operation, then determine swiping inertia information based on the vehicle speed information and the swiping speed information, then inertially display the three-dimensional virtual parking scene according to the swiping inertia information, and display a target three-dimensional virtual parking scene after the inertial display is over.

In another example, when the user needs to quickly browse the three-dimensional virtual parking scene, the three-dimensional virtual parking scene can be quickly browsed by quickly swiping on the three-dimensional virtual parking scene, and the in-vehicle central control screen can control the three-dimensional virtual parking scene in the graphical user interface according to the direction and the distance of the swiping operation of the user. Specifically, the finger leaves the screen after quickly swiping across the screen, and the in-vehicle central control screen can calculate a threshold based on the speed at which the finger leaves the screen and the current driving speed of the vehicle and establish an inertial sliding through the threshold to ensure the browsing experience of the user. The threshold may be used to determine the distance of the inertial display of the three-dimensional virtual parking scene along the swiping direction of the swiping operation after the swiping operation of the user terminates.

For example, first the current speed of the vehicle is obtained through a vehicle control unit, the swiping speed of the swiping operation is obtained, then a threshold of necessary sliding of the three-dimensional virtual parking scene in the swiping direction corresponding to the swiping operation is calculated by adopting the speed of the vehicle and the swiping speed, then the corresponding three-dimensional virtual parking scene is determined according to this threshold, and a picture of the inertial sliding is displayed after the user's finger leaves the screen, so that the user can quickly browse the three-dimensional virtual parking scene by fast swiping, the efficiency of the user finding a parking space is improved, and the user experience is guaranteed.

In another alternative embodiment of the present invention, the three-dimensional virtual parking scene can also include at least one display hot zone, and the in-vehicle central control screen can respond to the user operation on the three-dimensional virtual parking scene to hide the at least one display hot zone and control the in-vehicle display device to present the three-dimensional virtual parking scene corresponding to the user operation and display the real scene corresponding to the three-dimensional virtual parking scene; and display the at least one display hot zone in the three-dimensional virtual parking scene in response to the termination of the user operation on the three-dimensional virtual parking scene.

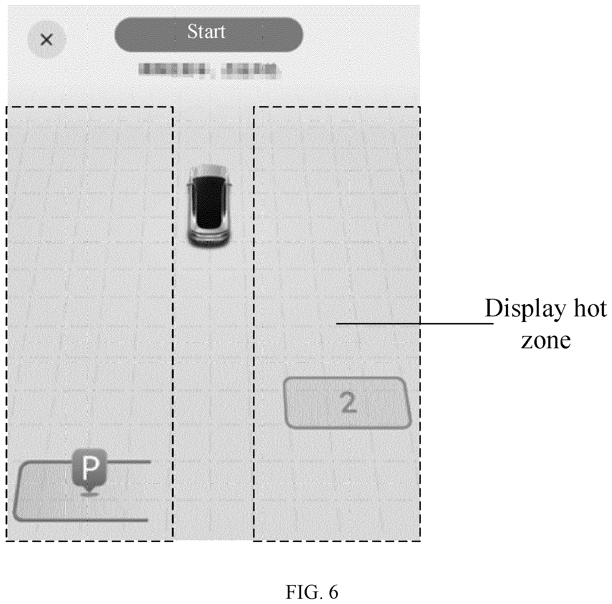

Referring to FIG. 6, a schematic diagram of display hot zones according to an embodiment of the present invention is illustrated. The display hot zones can be displayed on both sides of the three-dimensional virtual parking scene. When the vehicle is in the state of looking for a parking space, the user can click on the display hot zones, and after the user clicks on the display hot zones, the in-vehicle central control screen hides the two display hot zones, controls, according to the user operation, the in-vehicle display device to present the three-dimensional virtual parking scene corresponding to the user operation, displays the real scene corresponding to the three-dimensional virtual parking scene, and then re-displays the display hot zones in the three-dimensional virtual parking scene after the user ends the operation on the three-dimensional virtual parking scene, so that the user can re-trigger the operation on the three-dimensional virtual parking scene again.

In addition, the in-vehicle central control screen resets the target three-dimensional virtual parking scene to the default viewing angle when no user operation on the three-dimensional virtual parking scene is detected by the in-vehicle central control screen within a predetermined time period. Specifically, after the in-vehicle central control screen completes the operation of rotating or zooming in or out on the three-dimensional virtual parking scene, when no user operation for the three-dimensional virtual parking scene is detected by the in-vehicle central control screen, a last displayed picture may be restored to the default viewing angle, i.e., restored to the picture corresponding to the scene of parking, after being maintained for a certain time period. Moreover, the user can also double-click on the three-dimensional virtual parking scene to return the three-dimensional virtual parking scene to the original three-dimensional virtual parking scene immediately.

Specifically, the restoration process may include: first obtaining the current scene information, including the display scale, the viewing angle, etc., of the three-dimensional virtual parking scene through the control unit; when no user operation on the three-dimensional virtual parking scene is detected within the predetermined time period, or in response to a double-click on the three-dimensional virtual parking scene, determining the target position and the target vector of the current three-dimensional virtual parking scene according to the display scale, the viewing angle, and other information; creating a data changing animation changing from 0 to 1; then obtaining the current changing data as a percentage and the position, normal vector, and orientation vector of the virtual camera; and gradually restoring the picture to a default picture according to the change of the percentage.

In a specific implementation, when detecting an abnormal signal sent transmitted by a predetermined sensor, the in-vehicle central control screen resets the target three-dimensional virtual parking scene to a default three-dimensional virtual parking scene and stops responding to the user operation on the three-dimensional virtual parking scene. The abnormal signal can include a speed abnormality signal, a door opening signal, a front and rear cover opening signal, a sensor failure signal, a rolling signal, a reversing signal, etc., and in the driving scene corresponding to these signals, the in-vehicle central control screen can limit the user's interaction with the three-dimensional virtual parking scene to avoid interruption of the currently executed interaction or the state of the vehicle. Specifically, when the in-vehicle central control screen is in the process of parking, signals sent by other units of the vehicle can be obtained, and when the signals are abnormal signals, the current three-dimensional virtual parking scene is restored to the default image and the responding to the user's interaction operation on the three-dimensional virtual parking scene is stopped, so as to ensure that the currently executed interaction or the state of the vehicle is not interrupted.

It should be noted that the embodiments of this invention include but are not limited to the above examples.

In step 103, in response to a selection operation on the at least one parking control, a target available parking space is determined and a parking instruction for the target available parking space is generated to control the vehicle to park in the target available parking space.

In a specific implementation, after the user rotates and zooms in or out on the three-dimensional virtual parking scene through the swiping operation, the zooming operation, etc., and the in-vehicle central control screen synchronously displays the corresponding real scene, so that the user can effectively perceive the environment where the vehicle is currently located and then select a target parking control through the picture presented by the in-vehicle central control screen, and the in-vehicle system generates the corresponding parking instruction according to the selection of the user to control the vehicle to automatically park in an available parking space corresponding to the target parking control.

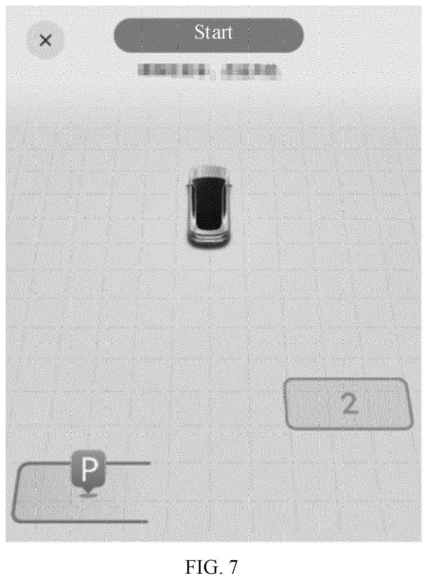

In an example, referring to FIG. 7, a schematic diagram of a three-dimensional virtual parking scene according to an embodiment of the present invention is illustrated. After the user turns on the vehicle parking function, the in-vehicle system can display the virtual vehicle and the three-dimensional virtual parking on the in-vehicle central control screen, and the corresponding available parking spaces ("P" and "2" in the figure correspond to the available parking spaces, and the user can select from the available parking spaces) can be included in the three-dimensional virtual parking scene, so that the user can perceive the surrounding environment of the vehicle to facilitate parking by simulating the environment where the vehicle is currently located. The "Start" control in the figure can be configured for turning on the automatic parking of the vehicle.

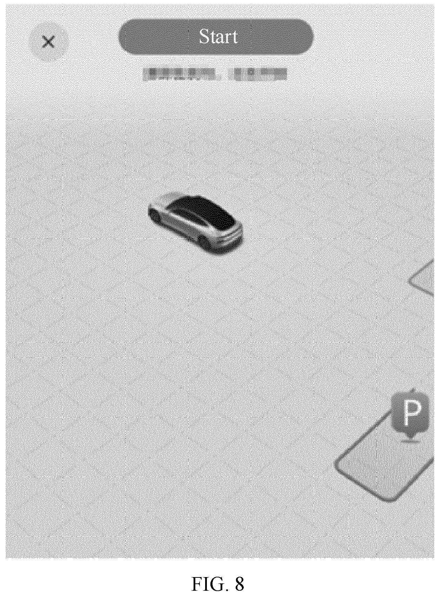

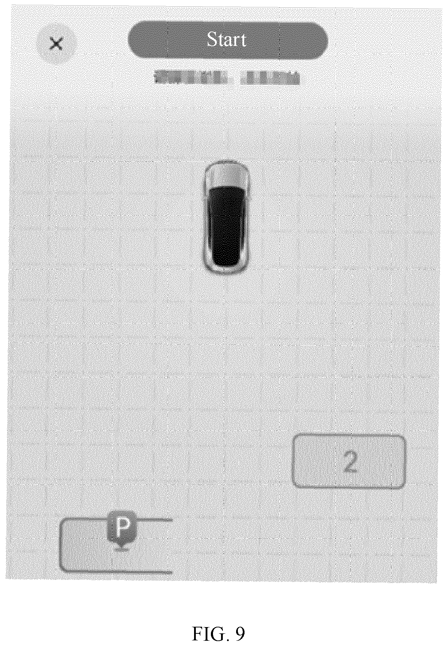

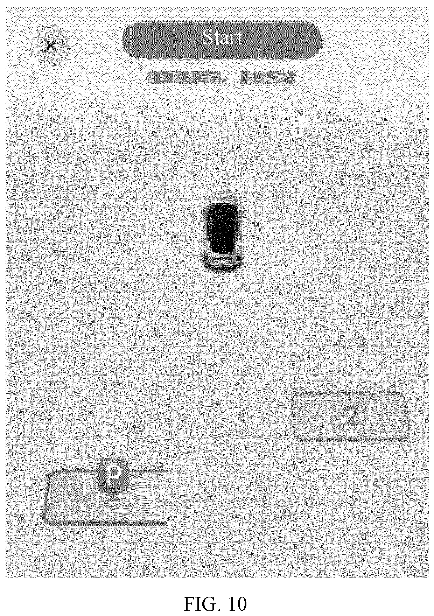

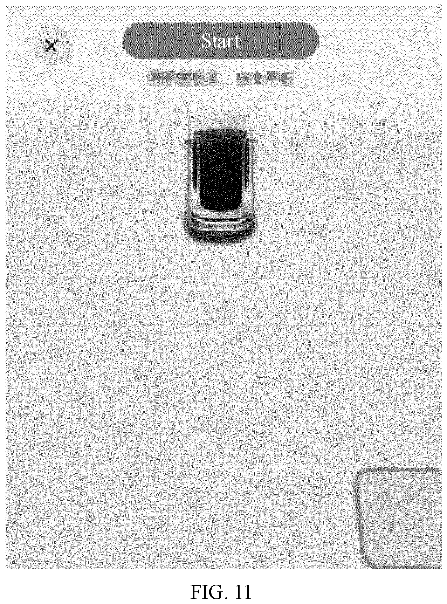

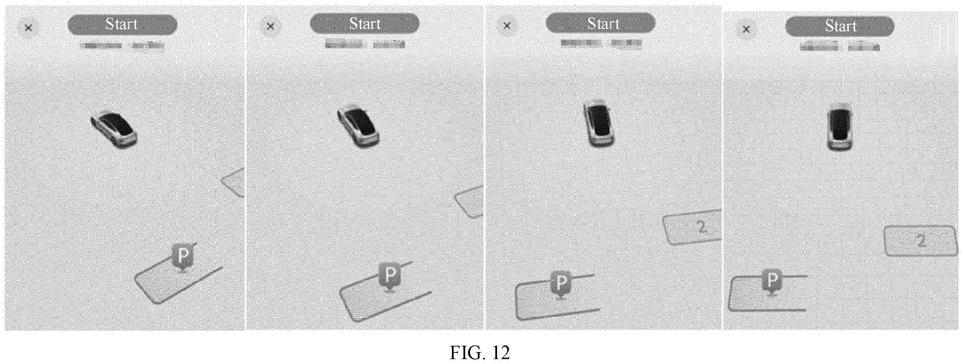

During the process of parking, the user can switch the viewing angle of the three-dimensional virtual parking scene through the swiping operation. Referring to FIG. 8, a schematic diagram of the three-dimensional virtual parking scene according to the embodiment of the present application is illustrated, and the user swipes to the right to switch the viewing angle of the picture of the three-dimensional virtual parking scene accordingly; referring to FIG. 9, a schematic diagram of the three-dimensional virtual parking scene according to an embodiment of the present invention is illustrated, and the user swipes downwards to switch the overlooking viewing angle of the three-dimensional virtual parking scene; and referring to FIG. 10 and FIG. 11, schematic diagrams of the three-dimensional virtual parking scene according to embodiments of the present invention are illustrated, FIG. 10 is a picture where the user zooms out on the three-dimensional virtual parking scene and FIG. 11 is a picture where the user zooms in on the three-dimensional virtual parking scene. In addition, when the user double-clicks on the screen or the in-vehicle central control screen detects no user operation within 10 seconds, the three-dimensional virtual parking scene can be gradually reset to the default picture through animation. Referring to FIG. 12, part of schematic diagrams of resetting of the three-dimensional virtual parking scene according to an embodiment of the invention is illustrated, and the in-vehicle central control screen can gradually reset the three-dimensional virtual parking scene to the default picture at a certain speed.

The embodiments of the present invention can be applied to a vehicle that includes an in-vehicle display device. The vehicle displays a three-dimensional virtual parking scene and a corresponding current real scene in the in-vehicle display device in response to detecting an automatic parking start instruction, then controls, in response to a user operation on the three-dimensional virtual parking scene, the in-vehicle display device to present a three-dimensional virtual parking scene corresponding to the user operation and display a real scene corresponding to the three-dimensional virtual parking scene, where the three-dimensional virtual parking scene includes at least one parking control and each of the at least one parking control corresponds to one available parking space, and then, determines, in response to a selection operation on the at least parking control, a target available parking space and generates a parking instruction for the target available parking space to control the vehicle to park in the target available parking space. In this way, during the user's parking process, the user can operate in the in-vehicle display device, improving the user's perception of the surrounding environment of the vehicle, ensuring the safety of parking and improving the user experience.

It should be noted that the method embodiments are expressed as a series of action combinations, for the sake of simplification. However, those skilled in the art should appreciate that the embodiments of this invention are not limited by the described sequence of the actions. According to the embodiments of the present invention, certain steps may be performed in other orders or simultaneously. Further, those skilled in the art should also be aware that the embodiments described in the specification are all preferred embodiments, and some factions involved are not necessarily required by the embodiments of this invention.

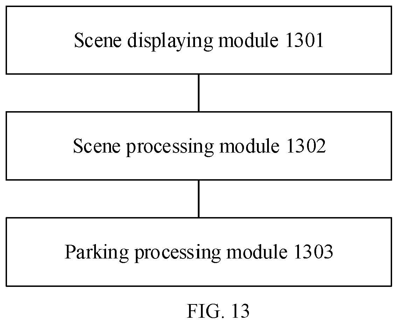

Referring to FIG. 13, a structural block diagram of an interaction apparatus for vehicle automatic parking according to an embodiment of the present invention is illustrated, the interaction apparatus is applied to a vehicle including an in-vehicle display device. The vehicle may specifically include the following modules: a scene display module 1301 configured to display in the in-vehicle display device, in response to detecting an automatic parking start instruction, a three-dimensional virtual parking scene and a corresponding current real scene; a scene processing module 1302 configured to: control, in response to a user operation on the three-dimensional virtual parking scene, the in-vehicle display device to present the three-dimensional virtual parking scene corresponding to the user operation and display a real scene corresponding to the three-dimensional virtual parking scene, where the three-dimensional virtual parking scene includes at least one parking control, and each of the at least one parking control corresponds to one available parking space; and a parking processing module 1303 configured to: determine, in response to a selection operation on the at least one parking control, a target available parking space and generate a parking instruction for the target available parking space to control the vehicle to park in the target available parking space.

In an alternative embodiment of the present invention, the scene processing module 1302 includes: a scene zooming sub-module configured to: control, in response to a zooming operation on the three-dimensional virtual parking scene, zooming-in or zooming-out of the three-dimensional virtual parking scene and the real scene within a predetermined zoom range in the in-vehicle display device; and a scene resetting sub-module configured to: control, in response to a termination of the zooming operation on the three-dimensional virtual parking scene, the three-dimensional virtual parking scene and the real scene to be reset to a predetermined display scale in the in-vehicle display device.

In an alternative embodiment of the present invention, the scene zooming sub-module is specifically configured to: determine, in response to a first zooming operation on the three-dimensional virtual parking scene, a first zooming scale corresponding to the first zooming operation; zoom in or out on the three-dimensional virtual parking scene and the real scene in accordance with the first zooming scale in the in-vehicle display device, when the first zooming scale is smaller than or equal to a maximum scale; and zoom in or out on the three-dimensional virtual parking scene and the real scene in accordance with the maximum scale in the in-vehicle display device, when the first zooming scale is greater than the maximum scale.

In an alternative embodiment of the present invention, the scene zooming sub-module is specifically configured to: determine, in response to a second zooming operation on the three-dimensional virtual parking scene, a second zooming scale corresponding to the second zooming operation; zoom in or out on the three-dimensional virtual parking scene and the real scene in accordance with the second zooming scale in the in-vehicle display device, when the second zooming scale is greater than or equal to a minimum scale; and zoom in or out on the three-dimensional virtual parking scene and the real scene in accordance with the minimum scale in the in-vehicle display device, when the second zooming scale is smaller than the minimum scale.

In an alternative embodiment of the present invention, the scene processing module 1302 includes a scene rotation sub-module configured to: control, in response to a termination of a swiping operation on the three-dimensional virtual parking scene, the three-dimensional virtual parking scene and the real scene to rotate in a direction corresponding to the swiping operation within a predetermined angle range in the in-vehicle display device.

In an alternative embodiment of the present invention, the scene rotation sub-module is specifically configured to: control, in response to a termination of a lateral swiping operation on the three-dimensional virtual parking scene, the three-dimensional virtual parking scene and the real scene to rotate in a direction corresponding to the lateral swiping operation within a first predetermined angle range in the in-vehicle display device.

In an alternative embodiment of the present invention, the scene rotation sub-module is specifically configured to: control, in response to a termination of a longitudinal swiping operation on the three-dimensional virtual parking scene, the three-dimensional virtual parking scene and the real scene to rotate in a direction corresponding to the longitudinal swiping operation within a second predetermined angle range in the in-vehicle display device.

In an alternative embodiment of the present invention, the three-dimensional virtual parking scene includes at least one display hot zone, and the scene processing module 1302 includes: a scene processing sub-module configured to: in response to the user operation on the three-dimensional virtual parking scene, hide the at least one display hot zone, and control the in-vehicle display device to present the three-dimensional virtual parking scene corresponding to the user operation and display the real scene corresponding to the three-dimensional virtual parking scene; and a hot zone display sub-module configured to display the at least one display hot zone in the three-dimensional virtual parking scene in response to a termination of the user operation on the three-dimensional virtual parking scene.

In an alternative embodiment of the present invention, the interaction apparatus further includes a viewing angle resetting module configured to: reset the three-dimensional virtual parking scene and the real scene to a default viewing angle in the in-vehicle display device when no user operation on the three-dimensional virtual parking scene is detected within a predetermined time period.

In an alternative embodiment of the present invention, the interaction apparatus further includes a response processing module configured to: reset the three-dimensional virtual parking scene and the real scene to a default viewing angle, and stop responding to the user operation on the three-dimensional virtual parking scene, in response to detecting an abnormal signal transmitted by a predetermined sensor.

In an alternative embodiment of the present invention, each of the at least one parking control is a three-dimensional control.

As for the apparatus embodiments, since they are basically similar to the method embodiments, their descriptions are relatively simple, and for the related parts, please refer to the parts of the description of the method embodiments.

The embodiments of the present invention also provide a vehicle. The vehicle includes: one or more processors; and one or more machine-readable media having instructions stored thereon, where the instructions, when executed by the one or more processors, cause the vehicle to execute the method described in the embodiments of the present invention.

The embodiments of the present invention also provide a machine-readable medium having instructions stored thereon, where the instructions, when executed by one or more processors, cause the one or more processors to execute the method described in the embodiments of the present invention.

## Claims

1. An interaction method for vehicle automatic parking, applied in a vehicle comprising an in-vehicle display device, the method comprising:
controlling (101), in response to detecting an automatic parking start instruction, the in-vehicle display device to display a three-dimensional virtual parking scene and a corresponding current real scene;
controlling (102), in response to a user operation on the three-dimensional virtual parking scene, the in-vehicle display device to present the three-dimensional virtual parking scene corresponding to the user operation and display a real scene corresponding to the three-dimensional virtual parking scene, wherein the three-dimensional virtual parking scene comprises at least one parking control, and each of the at least one parking control corresponds to one available parking space; and
determining, in response to a selection operation on the at least one parking control, a target available parking space, and generating a parking instruction for the target available parking space to control the vehicle to park in the target available parking space (103).

2. The method according to claim 1, wherein said controlling (102), in response to the user operation on the three-dimensional virtual parking scene, the in-vehicle display device to present the three-dimensional virtual parking scene corresponding to the user operation and display the real scene corresponding to the three-dimensional virtual parking scene comprises:
controlling, in response to a zooming operation on the three-dimensional virtual parking scene, zooming-in or zooming-out of the three-dimensional virtual parking scene and the real scene within a predetermined zoom range in the in-vehicle display device; and
controlling, in response to a termination of the zooming operation on the three-dimensional virtual parking scene, the three-dimensional virtual parking scene and the real scene to be reset to a predetermined display scale in the in-vehicle display device.

3. The method according to claim 2, wherein said controlling, in response to the zooming operation on the three-dimensional virtual parking scene, zooming-in or zooming-out of the three-dimensional virtual parking scene and the real scene within the predetermined zoom range in the in-vehicle display device comprises:
determining, in response to a first zooming operation on the three-dimensional virtual parking scene, a first zooming scale corresponding to the first zooming operation;
zooming in or out on the three-dimensional virtual parking scene and the real scene in accordance with the first zooming scale in the in-vehicle display device, when the first zooming scale is smaller than or equal to a maximum scale; and
zooming in or out on the three-dimensional virtual parking scene and the real scene in
accordance with the maximum scale in the in-vehicle display device, when the first zooming scale is greater than the maximum scale.

4. The method according to claim 2, wherein said controlling, in response to the zooming operation on the three-dimensional virtual parking scene, zooming-in or zooming-out of the three-dimensional virtual parking scene and the real scene within the predetermined zoom range in the in-vehicle display device comprises:
determining, in response to a second zooming operation on the three-dimensional virtual parking scene, a second zooming scale corresponding to the second zooming operation;
zooming in or out on the three-dimensional virtual parking scene and the real scene in accordance with the second zooming scale in the in-vehicle display device, when the second zooming scale is greater than or equal to a minimum scale; and
zooming in or out on the three-dimensional virtual parking scene and the real scene in
accordance with the minimum scale in the in-vehicle display device, when the second zooming scale is smaller than the minimum scale.

5. The method according to claim 1, wherein said controlling (101), in response to the user operation on the three-dimensional virtual parking scene, the in-vehicle display device to present the three-dimensional virtual parking scene corresponding to the user operation and display the real scene corresponding to the three-dimensional virtual parking scene comprises:
controlling, in response to a termination of a swiping operation on the three-dimensional virtual parking scene, the three-dimensional virtual parking scene and the real scene to rotate in a direction corresponding to the swiping operation within a predetermined angle range in the in-vehicle display device.

6. The method according to claim 5, wherein said controlling, in response to the termination of the swiping operation on the three-dimensional virtual parking scene, the three-dimensional virtual parking scene and the real scene to rotate in the direction corresponding to the swiping operation within the predetermined angle range in the in-vehicle display device comprises:
controlling, in response to a termination of a lateral swiping operation on the three-dimensional virtual parking scene, the three-dimensional virtual parking scene and the real scene to rotate in a direction corresponding to the lateral swiping operation within a first predetermined angle range in the in-vehicle display device.

7. The method according to claim 5, wherein said controlling, in response to the termination of the swiping operation on the three-dimensional virtual parking scene, the three-dimensional virtual parking scene and the real scene to rotate in the direction corresponding to the swiping operation within the predetermined angle range in the in-vehicle display device comprises:
controlling, in response to a termination of a longitudinal swiping operation on the three-dimensional virtual parking scene, the three-dimensional virtual parking scene and the real scene to rotate in a direction corresponding to the longitudinal swiping operation within a second predetermined angle range in the in-vehicle display device.

8. The method according to claim 1, wherein the three-dimensional virtual parking scene comprises at least one display hot zone, and said controlling (101), in response to the user operation on the three-dimensional virtual parking scene, the in-vehicle display device to present the three-dimensional virtual parking scene corresponding to the user operation and display the real scene corresponding to the three-dimensional virtual parking scene comprises:
in response to the user operation on the three-dimensional virtual parking scene, hiding the at least one display hot zone, and controlling the in-vehicle display device to present the three-dimensional virtual parking scene corresponding to the user operation and display the real scene corresponding to the three-dimensional virtual parking scene; and
displaying, in response to a termination of the user operation on the three-dimensional virtual parking scene, the at least one display hot zone in the three-dimensional virtual parking scene.

9. The method according to claim 1, further comprising:
resetting the three-dimensional virtual parking scene and the real scene to a default viewing angle in the in-vehicle display device, when no user operation on the three-dimensional virtual parking scene is detected within a predetermined time period.

10. The method according to claim 1, further comprising:
in response to detecting an abnormal signal transmitted by a predetermined sensor, resetting the three-dimensional virtual parking scene and the real scene to a default viewing angle, and stopping responding to the user operation on the three-dimensional virtual parking scene.

11. The method according to claim 1, wherein each of the at least one parking control is a three-dimensional control.

12. An interaction apparatus for vehicle automatic parking of a vehicle comprising an in-vehicle display device, the apparatus comprising:
a scene displaying module (1301) configured to control, in response to detecting an automatic parking start instruction, the in-vehicle display device to display a three-dimensional virtual parking scene and a corresponding current real scene in the in-vehicle display device;
a scene processing module (1302) configured to control, in response to a user operation on the three-dimensional virtual parking scene, the in-vehicle display device to present the three-dimensional virtual parking scene corresponding to the user operation and display a real scene corresponding to the three-dimensional virtual parking scene, wherein the three-dimensional virtual parking scene comprises at least one parking control, and each of the at least one parking control corresponds to one available parking space; and
a parking processing module (1303) configured to determine, in response to a selection operation on the at least one parking control, a target available parking space, and generate a parking instruction for the target available parking space to control the vehicle to park in the target available parking space.

13. The interaction apparatus according to claim 12, comprising:
one or more processors; and
one or more machine-readable media having instructions stored thereon, wherein the instructions, when executed by the one or more processors, cause the performance of the interaction apparatus.

14. A machine-readable medium having instructions stored thereon, wherein the instructions, when executed by the interaction apparatus according to any one of claims 12, 13, cause the interaction apparatus to implement the method according to any one of claims 1 to 11.

## Patentansprüche

1. Interaktionsverfahren zum automatischen Parken eines Fahrzeugs, das in einem Fahrzeug mit einem fahrzeuginternen Anzeigegerät angewendet wird, wobei das Verfahren Folgendes beinhaltet:
Steuern (101), als Reaktion auf die Erkennung einer Anweisung zum Starten von automatischem Parken, des fahrzeuginternen Anzeigegeräts zum Anzeigen einer dreidimensionalen virtuellen Parkszene und einer entsprechenden aktuellen realen Szene;
Steuern (102), als Reaktion auf eine Benutzerbedienung an der dreidimensionalen virtuellen Parkszene, des fahrzeuginternen Anzeigegeräts zum Präsentieren der dreidimensionalen virtuellen Parkszene entsprechend der Benutzerbedienung und zum Anzeigen einer realen Szene entsprechend der dreidimensionalen virtuellen Parkszene, wobei die dreidimensionale virtuelle Parkszene mindestens eine Parksteuerung umfasst und jede der mindestens einen Parksteuerungen einem verfügbaren Parkplatz entspricht; und
Bestimmen, als Reaktion auf einen Auswahlvorgang an der mindestens einen Parksteuerung, eines verfügbaren Zielparkplatzes und Erzeugen einer Parkanweisung für den verfügbaren Zielparkplatz, um das Fahrzeug zum Parken in dem verfügbaren Zielparkplatz (103) zu steuern.

2. Verfahren nach Anspruch 1, wobei das genannte Steuern (102), als Reaktion auf die Benutzerbedienung an der dreidimensionalen virtuellen Parkszene, des fahrzeuginternen Anzeigegeräts zum Präsentieren der dreidimensionalen virtuellen Parkszene entsprechend der Benutzerbedienung und zum Anzeigen der realen Szene entsprechend der dreidimensionalen virtuellen Parkszene Folgendes beinhaltet:
Steuern, als Reaktion auf einen Zoomvorgang an der dreidimensionalen virtuellen Parkszene, des Ein- oder Auszoomens der dreidimensionalen virtuellen Parkszene und der realen Szene innerhalb eines vorbestimmten Zoombereichs in dem fahrzeuginternen Anzeigegerät; und
Steuern, als Reaktion auf eine Beendigung des Zoomvorgangs an der dreidimensionalen virtuellen Parkszene, des Zurücksetzens der dreidimensionalen virtuellen Parkszene und der realen Szene auf einen vorbestimmten Anzeigemaßstab in dem fahrzeuginternen Anzeigegerät.

3. Verfahren nach Anspruch 2, wobei das genannte Steuern, als Reaktion auf den Zoomvorgang an der dreidimensionalen virtuellen Parkszene, des Ein- oder Auszoomens der dreidimensionalen virtuellen Parkszene und der realen Szene innerhalb des vorbestimmten Zoombereichs in dem fahrzeuginternen Anzeigegerät Folgendes beinhaltet:
Bestimmen, als Reaktion auf einen ersten Zoomvorgang an der dreidimensionalen virtuellen Parkszene, eines ersten Zoommaßstabs, der dem ersten Zoomvorgang entspricht;
Ein- und Auszoomen der dreidimensionalen virtuellen Parkszene und der realen Szene gemäß dem ersten Zoommaßstab in dem fahrzeuginternen Anzeigegerät, wenn der erste Zoommaßstab gleich einem oder kleiner als ein maximalen/r Maßstab ist; und
Ein- oder Auszoomen der dreidimensionalen virtuellen Parkszene und der realen Szene gemäß dem maximalen Maßstab in dem fahrzeuginternen Anzeigegerät, wenn der erste Zoommaßstab größer als der maximale Maßstab ist.

4. Verfahren nach Anspruch 2, wobei das genannte Steuern, als Reaktion auf den Zoomvorgang an der dreidimensionalen virtuellen Parkszene, des Ein- oder Auszoomens der dreidimensionalen virtuellen Parkszene und der realen Szene innerhalb des vorbestimmten Zoombereichs in dem fahrzeuginternen Anzeigegerät Folgendes beinhaltet:
Bestimmen, als Reaktion auf einen zweiten Zoomvorgang an der dreidimensionalen virtuellen Parkszene, eines zweiten Zoommaßstabs, der dem zweiten Zoomvorgang entspricht;
Ein- oder Auszoomen der dreidimensionalen virtuellen Parkszene und der realen Szene gemäß dem zweiten Zoom-Maßstab in dem fahrzeuginternen Anzeigegerät, wenn der zweite Zoommaßstab gleich einem oder größer als ein minimalen/r Maßstab ist; und
Ein- oder Auszoomen der dreidimensionalen virtuellen Parkszene und der realen Szene gemäß dem minimalen Maßstab in dem fahrzeuginternen Anzeigegerät, wenn der zweite Zoommaßstab kleiner als der minimale Maßstab ist.

5. Verfahren nach Anspruch 1, wobei das genannte Steuern (101), als Reaktion auf die Benutzerbedienung an der dreidimensionalen virtuellen Parkszene, des fahrzeuginternen Anzeigegeräts zum Präsentieren der dreidimensionalen virtuellen Parkszene entsprechend der Benutzerbedienung und zum Anzeigen der realen Szene entsprechend der dreidimensionalen virtuellen Parkszene Folgendes beinhaltet:
Steuern, als Reaktion auf eine Beendigung eines Wischvorgangs an der dreidimensionalen virtuellen Parkszene, der dreidimensionalen virtuellen Parkszene und der realen Szene zum Drehen in einer Richtung entsprechend dem Wischvorgang innerhalb eines vorbestimmten Winkelbereichs in dem fahrzeuginternen Anzeigegerät.

6. Verfahren nach Anspruch 5, wobei das genannte Steuern, als Reaktion auf die Beendigung des Wischvorgangs an der dreidimensionalen virtuellen Parkszene, der dreidimensionalen virtuellen Parkszene und der realen Szene zum Drehen in der Richtung entsprechend dem Wischvorgang innerhalb des vorbestimmten Winkelbereichs in dem fahrzeuginternen Anzeigegerät Folgendes beinhaltet:
Steuern, als Reaktion auf eine Beendigung eines lateralen Wischvorgangs an der dreidimensionalen virtuellen Parkszene, der dreidimensionalen virtuellen Parkszene und der realen Szene zum Drehen in einer Richtung entsprechend dem lateralen Wischvorgang innerhalb eines ersten vorbestimmten Winkelbereichs in dem fahrzeuginternen Anzeigegerät.

7. Verfahren nach Anspruch 5, wobei das genannte Steuern, als Reaktion auf die Beendigung des Wischvorgangs an der dreidimensionalen virtuellen Parkszene, der dreidimensionalen virtuellen Parkszene und der realen Szene zum Drehen in der Richtung entsprechend dem Wischvorgang innerhalb des vorbestimmten Winkelbereichs in dem fahrzeuginternen Anzeigegerät Folgendes beinhaltet:
Steuern, als Reaktion auf eine Beendigung eines longitudinalen Wischvorgangs an der dreidimensionalen virtuellen Parkszene, der dreidimensionalen virtuellen Parkszene und der realen Szene zum Drehen in einer Richtung entsprechend dem longitudinalen Wischvorgang innerhalb eines zweiten vorbestimmten Winkelbereichs in dem fahrzeuginternen Anzeigegerät.

8. Verfahren nach Anspruch 1, wobei die dreidimensionale virtuelle Parkszene mindestens eine Anzeige-Hot-Zone umfasst, und das genannte Steuern (101), als Reaktion auf die Benutzerbedienung an der dreidimensionalen virtuellen Parkszene, des fahrzeuginternen Anzeigegeräts zum Präsentieren der dreidimensionalen virtuellen Parkszene entsprechend der Benutzerbedienung und zum Anzeigen der realen Szene entsprechend der dreidimensionalen virtuellen Parkszene Folgendes beinhaltet:
Ausblenden, als Reaktion auf die Benutzerbedienung an der dreidimensionalen virtuellen Parkszene, der mindestens einen Anzeige-Hot-Zone, und Steuern des fahrzeuginternen Anzeigegeräts zum Präsentieren der dreidimensionalen virtuellen Parkszene entsprechend der Benutzerbedienung und zum Anzeigen der realen Szene entsprechend der dreidimensionalen virtuellen Parkszene; und
Anzeigen, als Reaktion auf eine Beendigung der Benutzerbedienung an der dreidimensionalen virtuellen Parkszene, der mindestens einen Anzeige-Hot-Zone in der dreidimensionalen virtuellen Parkszene.

9. Verfahren nach Anspruch 1, das ferner Folgendes beinhaltet:
Zurücksetzen der dreidimensionalen virtuellen Parkszene und der realen Szene auf einen Standardblickwinkel in dem fahrzeuginternen Anzeigegerät, wenn innerhalb einer vorbestimmten Zeitspanne keine Benutzerbedienung an der dreidimensionalen virtuellen Parkszene erkannt wird.

10. Verfahren nach Anspruch 1, das ferner Folgendes beinhaltet:
Zurücksetzen, als Reaktion auf das Erkennen eines von einem vorbestimmten Sensor übertragenen anormalen Signals, der dreidimensionalen virtuellen Parkszene und der realen Szene auf einen Standardblickwinkel, und Beenden des Ansprechens auf die Benutzerbedienung an der dreidimensionalen virtuellen Parkszene.

11. Verfahren nach Anspruch 1, wobei jede der mindestens einen Parksteuerungen eine dreidimensionale Steuerung ist.

12. Interaktionsvorrichtung zum automatischen Parken eines Fahrzeugs mit einem fahrzeuginternen Anzeigegerät, wobei die Vorrichtung Folgendes umfasst:
ein Szenenanzeigemodul (1301), das zum Steuern, als Reaktion auf die Erkennung einer Anweisung zum Starten von automatischem Parken, des fahrzeuginternen Anzeigegeräts zum Anzeigen einer dreidimensionalen virtuellen Parkszene und einer entsprechenden aktuellen realen Szene in dem fahrzeuginternen Anzeigegerät konfiguriert ist;
ein Szenenverarbeitungsmodul (1302), das zum Steuern, als Reaktion auf eine Benutzerbedienung an der dreidimensionalen virtuellen Parkszene, des fahrzeuginternen Anzeigegeräts zum Präsentieren der dreidimensionalen virtuellen Parkszene entsprechend der Benutzerbedienung und zum Anzeigen einer realen Szene entsprechend der dreidimensionalen virtuellen Parkszene konfiguriert ist, wobei die dreidimensionale virtuelle Parkszene mindestens eine Parksteuerung umfasst und jede der mindestens einen Parksteuerungen einem verfügbaren Parkplatz entspricht; und
ein Parkverarbeitungsmodul (1303), das zum Bestimmen, als Reaktion auf einen Auswahlvorgang an der mindestens einen Parksteuerung, eines verfügbaren Zielparkplatzes und zum Erzeugen einer Parkanweisung für den verfügbaren Zielparkplatz zum Steuern des Fahrzeugs zum Parken in dem verfügbaren Zielparkplatz konfiguriert ist.

13. Interaktionsvorrichtung nach Anspruch 12, die Folgendes umfasst:
einen oder mehrere Prozessoren; und
ein oder mehrere maschinenlesbare Medien mit darauf gespeicherten Befehlen, wobei die Befehle bei Ausführung durch die ein oder mehreren Prozessoren die Implementation der Interaktionsvorrichtung bewirken.

14. Maschinenlesbares Medium mit darauf gespeicherten Befehlen, wobei die Befehle bei Ausführung durch die Interaktionsvorrichtung nach einem der Ansprüche 12, 13 bewirken, dass die Interaktionsvorrichtung das Verfahren nach einem der Ansprüche 1 bis 11 ausführt.

## Revendications

1. Procédé d'interaction pour un stationnement automatique de véhicule, appliqué dans un véhicule comprenant un dispositif d'affichage embarqué, le procédé comprenant :
une commande (101), en réponse à une détection d'une instruction de démarrage de stationnement automatique, du dispositif d'affichage embarqué pour afficher une scène de stationnement virtuelle tridimensionnelle et une scène réelle actuelle correspondante ;
une commande (102), en réponse à une opération d'utilisateur sur la scène de stationnement virtuelle tridimensionnelle, du dispositif d'affichage embarqué pour présenter la scène de stationnement virtuelle tridimensionnelle correspondant à l'opération d'utilisateur et afficher une scène réelle correspondant à la scène de stationnement virtuelle tridimensionnelle, dans lequel la scène de stationnement virtuelle tridimensionnelle comprend au moins une commande de stationnement, et chacune de l'au moins une commande de stationnement correspond à un espace de stationnement disponible ; et
une détermination, en réponse à une opération de sélection sur l'au moins une commande de stationnement, d'un espace de stationnement disponible cible, et une génération d'une instruction de stationnement pour l'espace de stationnement disponible cible pour commander le véhicule pour stationner dans l'espace de stationnement disponible cible (103).

2. Procédé selon la revendication 1, dans lequel ladite commande (102), en réponse à l'opération d'utilisateur sur la scène de stationnement virtuelle tridimensionnelle, du dispositif d'affichage embarqué pour présenter la scène de stationnement virtuelle tridimensionnelle correspondant à l'opération d'utilisateur et afficher la scène réelle correspondant à la scène de stationnement virtuelle tridimensionnelle comprend :
une commande, en réponse à une opération de zoom sur la scène de stationnement virtuelle tridimensionnelle, de zoom avant ou de zoom arrière de la scène de stationnement virtuelle tridimensionnelle et de la scène réelle au sein d'une plage de zoom prédéterminée dans le dispositif d'affichage embarqué ; et
une commande, en réponse à une fin de l'opération de zoom sur la scène de stationnement virtuelle tridimensionnelle, de la scène de stationnement virtuelle tridimensionnelle et de la scène réelle pour être réinitialisées à une échelle d'affichage prédéterminée dans le dispositif d'affichage embarqué.

3. Procédé selon la revendication 2, dans lequel ladite commande, en réponse à l'opération de zoom sur la scène de stationnement virtuelle tridimensionnelle, de zoom avant ou de zoom arrière de la scène de stationnement virtuelle tridimensionnelle et de la scène réelle au sein de la plage de zoom prédéterminée dans le dispositif d'affichage embarqué comprend :
une détermination, en réponse à une première opération de zoom sur la scène de stationnement virtuelle tridimensionnelle, d'une première échelle de zoom correspondant à la première opération de zoom ;
un zoom avant ou un zoom arrière de la scène de stationnement virtuelle tridimensionnelle et de la scène réelle selon la première échelle de zoom dans le dispositif d'affichage embarqué, lorsque la première échelle de zoom est inférieure ou égale à une échelle maximum ; et
un zoom avant ou un zoom arrière de la scène de stationnement virtuelle tridimensionnelle et de la scène réelle selon l'échelle maximum dans le dispositif d'affichage embarqué, lorsque la première échelle de zoom est supérieure à une échelle maximum.

4. Procédé selon la revendication 2, dans lequel ladite commande, en réponse à l'opération de zoom sur la scène de stationnement virtuelle tridimensionnelle, de zoom avant ou de zoom arrière de la scène de stationnement virtuelle tridimensionnelle et de la scène réelle au sein de la plage de zoom prédéterminée dans le dispositif d'affichage embarqué comprend :
une détermination, en réponse à une seconde opération de zoom sur la scène de stationnement virtuelle tridimensionnelle, d'une seconde échelle de zoom correspondant à la seconde opération de zoom ;
un zoom avant ou un zoom arrière sur la scène de stationnement virtuelle tridimensionnelle et la scène réelle selon la seconde échelle de zoom dans le dispositif d'affichage embarqué, lorsque la seconde échelle de zoom est supérieure ou égale à une échelle minimum ; et
un zoom avant ou un zoom arrière sur la scène de stationnement virtuelle tridimensionnelle et la scène réelle selon l'échelle minimum dans le dispositif d'affichage embarqué, lorsque la seconde échelle de zoom est plus petite que l'échelle minimum.

5. Procédé selon la revendication 1, dans lequel ladite commande (101), en réponse à l'opération d'utilisateur sur la scène de stationnement virtuelle tridimensionnelle, du dispositif d'affichage embarqué pour présenter la scène de stationnement virtuelle tridimensionnelle correspondant à l'opération d'utilisateur et afficher la scène réelle correspondant à la scène de stationnement virtuelle tridimensionnelle comprend :
une commande, en réponse à une fin d'une opération de balayage sur la scène de stationnement virtuelle tridimensionnelle, de la scène de stationnement virtuelle tridimensionnelle et de la scène réelle de manière à tourner dans une direction correspondant à l'opération de balayage au sein d'une plage d'angles prédéterminée dans le dispositif d'affichage embarqué.

6. Procédé selon la revendication 5, dans lequel ladite commande, en réponse à la fin de l'opération de balayage sur la scène de stationnement virtuelle tridimensionnelle, de la scène de stationnement virtuelle tridimensionnelle et de la scène réelle de manière à tourner dans la direction correspondant à l'opération de balayage au sein de la plage d'angles prédéterminée dans le dispositif d'affichage embarqué comprend :
une commande, en réponse à une fin de l'opération de balayage latéral sur la scène de stationnement virtuelle tridimensionnelle, de la scène de stationnement virtuelle tridimensionnelle et de la scène réelle de manière à tourner dans une direction correspondant à l'opération de balayage latéral au sein d'une première plage d'angles prédéterminée dans le dispositif d'affichage embarqué.

7. Procédé selon la revendication 5, dans lequel ladite commande, en réponse à la fin de l'opération de balayage sur la scène de stationnement virtuelle tridimensionnelle, de la scène de stationnement virtuelle tridimensionnelle et de la scène réelle de manière à tourner dans la direction correspondant à l'opération de balayage au sein de la plage d'angles prédéterminée dans le dispositif d'affichage embarqué comprend :
une commande, en réponse à une fin d'une opération de balayage longitudinal sur la scène de stationnement virtuelle tridimensionnelle, de la scène de stationnement virtuelle tridimensionnelle et de la scène réelle de manière à tourner dans une direction correspondant à l'opération de balayage longitudinal au sein d'une seconde plage d'angles prédéterminée dans le dispositif d'affichage embarqué.

8. Procédé selon la revendication 1, dans lequel la scène de stationnement virtuelle tridimensionnelle comprend au moins une zone active d'affichage, et ladite commande (101), en réponse à l'opération d'utilisateur sur la scène de stationnement virtuelle tridimensionnelle, du dispositif d'affichage embarqué pour présenter la scène de stationnement virtuelle tridimensionnelle correspondant à l'opération d'utilisateur et afficher la scène réelle correspondant à la scène de stationnement virtuelle tridimensionnelle comprend :
en réponse à l'opération d'utilisateur sur la scène de stationnement virtuelle tridimensionnelle, le fait de cacher l'au moins une zone active d'affichage, et de commander le dispositif d'affichage embarqué pour présenter la scène de stationnement virtuelle tridimensionnelle correspondant à l'opération d'utilisateur et afficher la scène réelle correspondant à la scène de stationnement virtuelle tridimensionnelle ; et
un affichage, en réponse à une fin de l'opération d'utilisateur sur la scène de stationnement virtuelle tridimensionnelle, de l'au moins une zone active d'affichage dans la scène de stationnement virtuelle tridimensionnelle.

9. Procédé selon la revendication 1, comprenant en outre :
une réinitialisation de la scène de stationnement virtuelle tridimensionnelle et de la scène réelle à un angle de vue par défaut dans le dispositif d'affichage embarqué, lorsqu'aucune opération d'utilisateur sur la scène de stationnement virtuelle tridimensionnelle n'est détectée pendant une période prédéterminée.

10. Procédé selon la revendication 1, comprenant en outre :
en réponse à une détection d'un signal anormal transmis par un capteur prédéterminé, une réinitialisation de la scène de stationnement virtuelle tridimensionnelle et de la scène réelle à un angle de vue par défaut, et le fait d'arrêter de répondre à l'opération d'utilisateur sur la scène de stationnement virtuelle tridimensionnelle.

11. Procédé selon la revendication 1, dans lequel chacune de l'au moins une commande de stationnement est une commande tridimensionnelle.

12. Appareil d'interaction pour un stationnement automatique de véhicule d'un véhicule comprenant un dispositif d'affichage embarqué, l'appareil comprenant :
un module d'affichage de scène (1301) configuré pour commander, en réponse à une détection d'une instruction de démarrage de stationnement automatique, le dispositif d'affichage embarqué pour afficher une scène de stationnement virtuelle tridimensionnelle et une scène réelle actuelle correspondante dans le dispositif d'affichage embarqué ;
un module de traitement de scène (1302) configuré pour commander, en réponse à une opération d'utilisateur sur la scène de stationnement virtuelle tridimensionnelle, le dispositif d'affichage embarqué pour présenter la scène de stationnement virtuelle tridimensionnelle correspondant à l'opération d'utilisateur et afficher une scène réelle correspondant à la scène de stationnement virtuelle tridimensionnelle, dans lequel la scène de stationnement virtuelle tridimensionnelle comprend au moins une commande de stationnement, et chacune de l'au moins une commande de stationnement correspond à un espace de stationnement disponible ; et
un module de traitement de stationnement (1303) configuré pour déterminer, en réponse à une opération de sélection sur l'au moins une commande de stationnement, un espace de stationnement disponible cible, et générer une instruction de stationnement pour l'espace de stationnement disponible cible pour commander le véhicule pour stationner dans l'espace de stationnement disponible cible.

13. Appareil d'interaction selon la revendication 12, comprenant :
un ou plusieurs processeurs ; et
un ou plusieurs supports lisibles par machine présentant des instructions stockées dessus, dans lequel les instructions, lorsqu'elles sont exécutées par les un ou plusieurs processeurs, amènent l'appareil d'interaction à fonctionner.

14. Support lisible par machine présentant des instructions stockées dessus, dans lequel les instructions, lorsqu'elles sont exécutées par l'appareil d'interaction selon l'une quelconque des revendications 12, 13, amènent l'appareil d'interaction à mettre en oeuvre le procédé selon l'une quelconque des revendications 1 à 11.
